# EUROPÄISCHE PATENTANMELDUNG

(11) **EP 4 841 970 A1**
(43) Veröffentlichungstag der Anmeldung: **18.11.2026**
(21) Anmeldenummer: 25175891.8
(22) Anmeldetag: 13.05.2025
(51) Int. Cl.: H04N 17/00, G01B 11/00

(54) **ANORDNUNG UND VERFAHREN ZUM KALIBRIEREN EINES FAHRZEUG-BILDSENSORS**

(71) Anmelder: Hella Gutmann Solutions GmbH, 79241 Ihringen (DE)
(72) Erfinder: Becker, Thomas, 79241 Ihringen (DE); Driewer, Adrian, 79241 Ihringen (DE)
(74) Vertreter: Pfenning, Meinig & Partner mbB

(57) **Zusammenfassung**

Die Erfindung betrifft eine Anordnung (10) und ein Verfahren für das Kalibrieren eines Fahrzeug-Bildsensors. Die Anordnung (10) umfasst eine Kalibriervorrichtung (14), mit:
- einer außerhalb des Fahrzeugs angeordneten Anzeigeeinrichtung (12) zum Anzeigen des Kalibriermusters,
- wenigstens einer Computereinrichtung (20),
wobei die Kalibriervorrichtung (14) relativ zu dem Fahrzeug variabel ausrichtbar ist, wobei die Computereinrichtung (20) dazu eingerichtet ist, wenigstens einen zulässigen Ausrichtungszustand der Kalibriervorrichtung (14) zu ermitteln, bei deren Einnahme das Kalibriermuster derart angezeigt werden kann, dass es einen Soll-Zustand einnimmt. Insbesondere kann die Computereinrichtung (20) ermitteln, ob für einen gegebenen Ausrichtungszustand ein Soll-Zustand des Kalibriermusters durch ein Verschieben oder eine andere geeignete Festlegung der Position und/oder Orientierung und/oder Größe des Kalibriermusters erreichbar ist.

## Beschreibung

Die Erfindung betrifft eine Anordnung zum Abbilden eines Kalibriermusters für das Kalibrieren eines Fahrzeug-Bildsensors. Ferner betrifft die Erfindung ein Verfahren zum Ausrichten einer Kalibriervorrichtung für das Kalibrieren eines Fahrzeug-Bildsensors.

Ein solches gattungsgemäßes Verfahren und eine solche gattungsgemäße Vorrichtung sind prinzipiell aus der EP 3 716 211 A1 bekannt. Dort wird mit einer Anzeigeeinrichtung ein Kalibriermuster abgebildet und ein Bildsensor in Form einer Kamera nimmt dieses zwecks einer Kamerakalibrierung auf.

Allgemein wird im Rahmen einer solchen Kamerakalibrierung eine Anzeigeeinrichtung zum Anzeigen eines Kalibriermusters in durch den Fahrzeughersteller vorgegebenem Abstand und in vorgegebener Höhe so vor dem Fahrzeug platziert, dass die Kamera das Kalibriermuster erfasst und darauf basierend ein internes Koordinatensystem des Kamerasystems kalibriert wird.

Derartige Kalibrierungen sind insbesondere dann notwendig, wenn fahrzeuggebundene Bildsensoren von Fahrerassistenzsystemen verwendet werden, wie beispielsweise von einem Adaptive Cruise Control System, ACC, einem Notfallbremsassistenten, einem Spurhalteassistenten, einer Hinderniserkennung, einer Verkehrsschilderkennung bis hin autonomen Fahrsystemen (Level 1-5).

Während sich das aus dem Stand der Technik bekannte Anzeigen von Kalibriermustern mittels einer Anzeigeeinrichtung prinzipiell bewährt hat, besteht nach wie vor ein Verbesserungsbedarf. Insbesondere hat sich gezeigt, dass ein Einrichtungsaufwand, bis die Kalibrierung durchgeführt werden kann, nach wie vor hoch ist und entsprechend Zeit und Können erfordert. So muss bisher in der Regel iterativ und mittels wiederholter Messungen vorgegangen werden, bis eine Anzeigeeinrichtung so vor dem Fahrzeug positioniert ist, dass mittels dieser das Kalibriermuster in vorgegebener Weise angezeigt werden, d.h. bis diese eine Soll-Relativposition zum Fahrzeug einnimmt.

Die Erfindung richtet sich daher auf die Aufgabe, den erforderlichen Einrichtaufwand für das Kalibrieren eines Fahrzeug-Bildsensors zu reduzieren.

Diese Aufgabe wird durch die Gegenstände der beigefügten unabhängigen Ansprüche gelöst. Vorteilhafte Weiterbildungen sind in den abhängigen Ansprüchen, in dieser Beschreibung und in den Figuren angegeben.

Entsprechend wird eine Anordnung zum Anzeigen eines Kalibriermusters für das Kalibrieren eines Fahrzeug-Bildsensors vorgeschlagen, wobei die Anordnung eine Kalibriervorrichtung umfasst, mit:
- einer außerhalb des Fahrzeugs angeordneten Anzeigeeinrichtung zum Anzeigen des Kalibriermusters,
- wenigstens einer Computereinrichtung,
wobei die Kalibriervorrichtung relativ zu dem Fahrzeug variabel ausrichtbar ist, wobei die Computereinrichtung dazu eingerichtet ist, wenigstens einen zulässigen Ausrichtungszustand der Kalibriervorrichtung, insbesondere relativ zum Fahrzeug, zu ermitteln, bei deren Einnahme das Kalibriermuster derart angezeigt werden kann, dass es einen Soll-Zustand einnimmt.

Die Anzeigeeinrichtung kann einen Projektor, einen Bildschirm und/oder eine elektronische Anzeigefläche umfassen, insbesondere eine LED- oder LCD-Anzeige oder einen anderen Flachbildschirm.

Die Anzeigeeinrichtung kann frei im Raum bewegbar sein, insbesondere in allen räumlichen Freiheitsgraden. Sie kann aktiv relativ zum insbesondere feststehenden Fahrzeug bewegt werden.

Beispielsweise kann die Anzeigeeinrichtung auf einem Haltegestell montiert sein. Das Haltegestell kann optional auf einem Fahrgestell angeordnet sein, um entlang des Untergrunds verschoben zu werden. Der Untergrund kann insbesondere ein Werkstattboden und/oder allgemein eben sein. Das Haltegestell kann sich relativ zu dem Untergrund aufrecht und insbesondere vertikal erstrecken. Das Haltegestell kann dazu eingerichtet sein, die Anzeigeeinrichtung in einem festen oder optional variierbaren Abstand, insbesondere Höhenabstand, relativ zum Untergrund zu tragen. Das Haltegestell kann allgemein dazu eingerichtet sein, die Anzeigeeinrichtung vor einer Fahrzeugfront zu positionieren und insbesondere auf Höhe der Windschutzscheibe und/oder vor einem Fahrzeugheck gegenüberliegend zum Einbauort einer Heckkamera, sofern vorhanden..

Die Ausrichtung der Kalibriervorrichtung kann größtenteils oder vollständig manuell erfolgen, beispielsweise durch Verschieben der Anzeigeeinrichtung und insbesondere von dem damit gekoppelten Haltegestell.

Die Computereinrichtung kann Positionsinformationen des Fahrzeugs und/oder der Kalibriervorrichtung und/oder Positionsinformationen angebend eine Relativposition von Fahrzeug und Kalibriervorrichtung erhalten oder ermitteln. Insbesondere kann die Computereinrichtung Informationen über die Relativposition des Fahrzeugs zur Kalibriervorrichtung ermitteln oder von einem Messsystem des Standes der Technik erhalten. Beispielsweise kann die Relativposition auf Basis einer Erfassung von optischen Targets ermittelt werden, welche temporär an dem Fahrzeug angebracht sein können.

Zusätzlich oder alternativ kann die Computereinrichtung Informationen betreffend wenigstens eine Soll-Relativposition des Kalibriermusters relativ zum Fahrzeug erhalten oder speichern, beispielsweise aus einer vom Fahrzeughersteller bereitgestellten Datenbank. Diese Informationen können zur Ermittlung eines zulässigen Ausrichtungszustands verwendet werden. Dieser kann insbesondere dann erreicht sein, wenn eine aktuelle Relativposition von Fahrzeug und Kalibriervorrichtung einer Soll-Relativposition entspricht.

Mit der hier offenbarten Lösung werden Anforderungen an eine manuelle Positionierung der Anzeigeeinrichtung reduziert. So kann zunächst eine grobe Positionierung der Anzeigeeinrichtung vor dem Fahrzeug ausreichen. Die Computereinrichtung kann anschließend automatisiert die Ermittlung eines zulässigen Ausrichtungszustands ermitteln, bei dessen Einnahme das Kalibriermuster in einem Soll-Zustand angezeigt werden kann. Insbesondere kann sie zunächst ermitteln, ob ein zulässiger Ausrichtungszustand mit der anfänglichen Ausrichtung bereits erreicht ist sowie optional, ob und/oder welche Änderungen der Ausrichtung zum Erreichen des zulässigen Ausrichtungszustands erforderlich sind. Durch diese automatisierte Prüfung und optionale Rückmeldung an den Bediener können aufwendige manuelle Kontrollen und iterative Anpassungen der Ausrichtung vereinfacht werden oder zumindest teilweise entfallen.

Eine Weiterbildung sieht vor, dass der Soll-Zustand, mit dem das Kalibriermuster anzeigbar ist, eine Vollständigkeit des Kalibriermusters und/oder eine Soll-Relativposition des Kalibriermusters relativ zu dem Fahrzeug und/oder eine Soll-Größe des Kalibriermusters umfasst.

Hierdurch kann sichergestellt werden, dass das Kalibriermuster weder abgeschnitten noch ungeeignet positioniert ist. Die Computereinrichtung kann somit insbesondere automatisiert eine zum Durchführen der Kalibrierung geeignete Anzeigbarkeit des Kalibriermusters prüfen.

Eine Weiterbildung sieht vor, dass die Computereinrichtung dazu eingerichtet ist, während zum Beispiel manueller Änderungen der Ausrichtung der Kalibriervorrichtung relativ zu dem Fahrzeug wiederholt zu ermitteln, ob ein zulässiger Ausrichtungszustand eingenommen wird.

Hierdurch kann die Kalibriervorrichtung iterativ vom Bediener verschoben werden, bis eine geeignete Position erreicht ist. Die Vorrichtung gibt hierzu bevorzugt eine optische und/oder akustische und/oder anderweitige Rückmeldung. Die Rückmeldung kann beispielsweise eine Anzeige von Richtungsangaben und/oder Entfernungswerten bis zu einer geeigneten Relativposition und/oder andere Informationen betreffend erforderliche Änderungen der Ausrichtung der Anzeigeeinrichtung umfassen. Während der Bediener somit nach wie vor in einer Rolle sein kann, die Ausrichtung manuelle und insbesondere iterativ zu ändern, wird er von der Aufgabe entlastet, fortlaufend zu überprüfen, ob die Ausrichtungsänderung erfolgreich war, d.h. ob ein zulässiger Ausrichtungszustand zum Durchführen des Kalibriervorgangs erreicht wurde.

Entsprechend sieht eine Weiterbildung vor, dass die Anordnung dazu eingerichtet ist, eine Rückmeldung für einen Bediener auszugeben, dass ein zulässiger Ausrichtungszustand erreicht wurde. Dies unterstützt den Bediener bei der Positionierung der Vorrichtung und reduziert den Aufwand für eine manuelle Justage. Die Rückmeldung kann zum Beispiel visuell oder mittels akustischer Signale erfolgen. Beispielsweise kann eine weitere Anzeigeeinrichtung bereitgestellt sein, insbesondere von einem Bedienterminal zur Durchführung und/oder Steuerung des Kalibriervorgangs.

Eine Weiterbildung sieht vor, dass das Kalibriermuster innerhalb einer Anzeigefläche der Anzeigeeinrichtung variabel positionierbar und/oder variabel orientierbar und/oder mit variabler Größe anzeigbar ist. Hierdurch kann die Anzeige des Kalibriermusters flexibel innerhalb des Anzeigebereichs angepasst werden, um einen Soll-Zustand einzunehmen. Die Computereinrichtung kann dazu eingerichtet, wenigstens einen dieser variablen Freiheitsgerade beim Überprüfen des Vorliegens eines Soll-Zustandes zu berücksichtigen. Dies kann ein Überprüfen umfassen, ob eine Änderung von wenigstens einem dieser Freiheitsgerade das Erreichen eines Soll-Zustandes ermöglicht. Optional kann eine solche Änderung insbesondere samt darauffolgender Anzeige von der Computereinrichtung initiiert oder durchgeführt werden. Daraufhin kann dem Bediener eine positive Rückmeldung betreffend das Erreichen eine Soll-Zustandes gegeben werden.

Zusammengefasst kann die Computereinrichtung für eine automatische Skalierung und/oder automatische Verschiebung des Kalibriermusters eingerichtet sein und/oder für eine Prüfung, ob derartige Maßnahmen insbesondere bei einer gegebenen Relativpositionierung das Erreichen eines Soll-Zustandes der hier offenbarten Art ermöglichen. Entsprechend sieht eine Weiterbildung vor, dass die Computereinrichtung dazu eingerichtet ist, zu ermitteln, ob für einen gegebenen Ausrichtungszustand ein Soll-Zustand des Kalibriermusters durch geeignete Festlegung der Position und/oder Orientierung und/oder Größe von diesem innerhalb der Anzeigefläche erreichbar ist.

Die Erfindung betrifft auch ein Verfahren zum Ausrichten einer Kalibriervorrichtung für das Kalibrieren eines Fahrzeug-Bildsensors, wobei die Kalibriervorrichtung variabel relativ zu dem Fahrzeug ausrichtbar ist und eine Anzeigeeinrichtung zum Anzeigen des Kalibriermusters umfasst, wobei das Verfahren aufweist:
- computergestütztes Ermitteln von wenigstens einem zulässigen Ausrichtungszustand der Anzeigeeinrichtung, bei deren Einnahme das Kalibriermuster derart angezeigt werden kann, dass es einen Soll-Zustand einnimmt.

Eine Weiterbildung sieht vor, dass der Soll-Zustand eine Vollständigkeit des Kalibriermusters und/oder eine Soll-Relativposition des Kalibriermusters relativ zu dem Fahrzeug und/oder eine Soll-Größe des Kalibriermusters umfasst.

Eine Weiterbildung sieht vor, dass das Verfahren ferner während Änderungen der Ausrichtung der Kalibriervorrichtung relativ zu dem Fahrzeug umfasst: wiederholtes Ermitteln, ob ein zulässiger Ausrichtungszustand eingenommen wird.

Eine Weiterbildung sieht vor, dass das Verfahren ferner umfasst: Ausgeben einer Rückmeldung für einen Bediener, dass ein zulässiger Ausrichtungszustand erreicht wurde.

Eine Weiterbildung sieht vor, dass das Kalibriermuster innerhalb einer Anzeigefläche der Anzeigeeinrichtung variabel positionierbar und/oder variabel orientierbar und/oder mit variabler Größe anzeigbar ist.

Eine Weiterbildung sieht vor, dass das Verfahren umfasst: Ermitteln, ob ein Soll-Zustand für einen gegebenen Ausrichtungszustand durch geeignete Festlegung der Position und/oder Orientierung und/oder Größe des Kalibriermusters innerhalb der Anzeigefläche erreichbar ist.

Sämtliche Ausführungen, Varianten und Weiterbildung, die im Kontext der Anordnung hier offenbart werden, können ebenso im Kontext des Verfahrens gelten, und umgekehrt. Dies betrifft insbesondere bei Anordnung und Verfahren gleichlautendende Merkmale.

Beispielhafte Ausführungsformen der Erfindung werden im Folgenden anhand der schematischen Figuren erläutert. Figurenübergreifend können für gleichartige Merkmale die gleichen Bezugszeichen verwendet werden.
- Figur 1: zeigt eine Anordnung gemäß einer Ausführungsform der Erfindung.
- Figur 2: zeigt ein Ablaufdiagramm eines Verfahrens gemäß einer Ausführungsform der Erfindung.

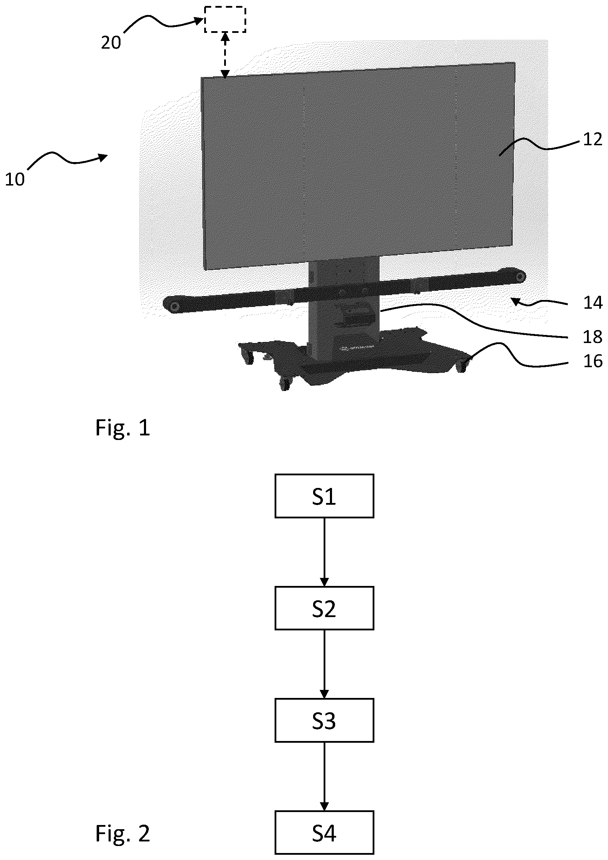

Figur 1 zeigt eine Anordnung 10 gemäß einer beispielhaften Ausführungsform, die zur Ausführung eines Verfahrens gemäß einer erfindungsgemäßen Ausführungsform eingerichtet ist. Die Anordnung 10 umfasst eine Kalibriervorrichtung 14 mit einer außerhalb des Fahrzeugs angeordneten Anzeigeeinrichtung 12 zum Anzeigen eines Kalibriermusters. Die Anzeigeeinrichtung 12 ist beispielhaft als Monitor oder Bildschirm ausgebildet und umfasst vorzugsweise einen LCD-Bildschirm (Liquid Crystal Display) oder einen anderen Flachbildschirm, beispielweise eine LED-Anzeigefläche (Light Emitting Diode) oder OLED-Anzeigefläche (Organic Light Emitting Diode) herkömmlicher Bauart.

Die Anzeigeeinrichtung 12 ist beispielhaft auf einem Haltegestell 18 angeordnet, das optional auf einem Fahrgestell 16 gelagert ist, um entlang eines Untergrunds, insbesondere eines ebenen Werkstattbodens, verschoben zu werden. Das Haltegestell 18 stützt die Anzeigeeinrichtung 12 gegenüber dem Untergrund ab und kann sich relativ zu diesem aufrecht und insbesondere vertikal erstrecken. Das Haltegestell 18 ist dazu eingerichtet sein, die Anzeigeeinrichtung 12 in einem festen oder variierbaren Abstand zum Untergrund zu tragen, vorzugsweise auf einer Höhe, die in etwa einer Fahrzeugfront oder einer Windschutzscheibe entspricht.

Weiterhin ist die Kalibriervorrichtung 14 mit einer Computereinrichtung 20 ausgestattet. Dies kann ortsfest sein und/oder unabhängig der Anzeigeeinrichtung 12 bewegbar sein. Insbesondere kann diese räumlich getrennt von der Anzeigeeinrichtung 12 ausgebildet sein, beispielweise innerhalb eines nicht dargestellten Bedienterminals oder Werkstatt-PCs. Wie mittels eines gestrichelten Doppelpfeils angedeutet, existiert vorzugsweise aber auch in diesem Fall aber eine Datenübertragungsmöglichkeit zur Anzeigeeinrichtung 12, insbesondere um die dortige Anzeige eines Kalibriermusters optional anzupassen oder allgemein zu steuern. Alternativ kann die Computereinrichtung 20 in die abgebildete verfahrbare Einheit aus Anzeigeeinrichtung 12, Haltegestell 18 und Fahrgestell 16 integriert sein, insbesondere unter Aufrechterhaltung der geschilderten Datenübertragungsmöglichkeit.

Die Computereinrichtung 20 umfasst einen Prozessor, der zum Ausführen von Programminstruktionen nach Art herkömmlicher Computer eingerichtet ist. Insbesondere ist die Computereinrichtung 20 dazu eingerichtet, Positionsinformationen zu verarbeiten und einen zulässigen Ausrichtungszustand der Kalibriervorrichtung 14 relativ zu dem nicht dargestellten Fahrzeug zu ermitteln, wie im Kontext von Figur 2 noch näher erläutert.

Im Kalibrierbetrieb wird ein nicht dargestelltes Fahrzeug vor der Anzeigeeinrichtung 12 positioniert, sodass die dem Betrachter von Figur 1 zugewandte Vorderseite der Anzeigeeinrichtung 12 der Fahrzeugfront oder im Falle einer Heckkamera dem Fahrzeugheck zugewandt ist. Beispielsweise in oder nahe einer Windschutzscheibe integrierte Kameras des Fahrzeugs können die Anzeigeeinrichtung 12 und insbesondere darauf abgebildete Kalibriermuster bekannter Art erfassen, um Kalibriermessungen nach bekannten Verfahren durchzuführen. Die Kalibiervorrichtung kann dafür weitere, hier nicht erwähnte Komponenten gemäß Stand der Technik umfassen.

Anhand von Figur 2 wird im Folgenden ein Verfahrensablauf gemäß einem Ausführungsbeispiel der Erfindung erläutert, wobei das Verfahren mittels einer Anordnung 10 gemäß einem Ausführungsbeispiel der Erfindung durchgeführt wird, insbesondere mit der Anordnung 10 aus Figur 1.

Dabei wird von einer Kalibriervorrichtung 14 ausgegangen, die eine an einem verfahrbaren und höhenverstellbaren Haltegestell getragene Anzeigeeinrichtung 12 umfasst, siehe bspw. Figur 1. Die Anzeigeeinrichtung 12 umfasst eine Anzeigefläche bekannter Größe und bekannter Lage innerhalb der Kalibriervorrichtung 14. Weiter wird davon ausgegangen, dass die Kalibriervorrichtung 14 so aufgestellt wurde, dass sie in einer vorgegebene Weise relativ zu dem Fahrzeug orientiert ist (z. B. lotrecht und parallel zu einer Fahrzeugachse). Dies kann in an sich bekannter Weise durch mechanische Justierung und/oder mittels Libellen sichergestellt werden. Es wird ferner davon ausgegangen, dass die Aufrechterhaltung der korrekten Relativorientierung auch bei einer anschließenden translatorischen Verschiebung der Kalibriervorrichtung gewährleistet ist und z.B. von einem Bediener entsprechend überprüft und ggf. nachjustiert wird.

Ein Schritt S1 des Verfahrens aus Fig. 2 umfasst Folgendes: Die Kalibriervorrichtung 14 wird vor dem Fahrzeug positioniert. Eine Position des Fahrzeugs relativ zu der Kalibriervorrichtung 14 und somit zu deren Anzeigeeinrichtung 12 wird mittels bekannten Lösungen des Standes der Technik ermittelt. Beispielsweise können an dem Fahrzeug zumindest temporär angebrachte optische Targets erfasst werden.

Ein Schritt S2 des Verfahrens aus Fig. 2 umfasst folgendes: Die Kalibriervorrichtung 14 erhält oder verfügt bereits über Informationen betreffend eine Soll-Relativposition des Kalibriermusters relativ zum Fahrzeug. Diese Informationen sind oder umfassen beispielsweise vom Fahrzeughersteller vorgegebenen Positionsdaten. Optional kann die Soll-Relativposition in Abhängigkeit einer Radkastenhöhe oder einer anderen eine Höhe betreffenden Größe definiert sein. Die Radkastenhöhe bzw. andere Höhengröße können folglich als ein modifizierbarer und/oder veränderlicher Parameter berücksichtigt werden, insbesondere um eine aktuelle Fahrwerkshöhe des Fahrzeugs zu berücksichtigen. Die Radkastenhöhe kann z.B. manuell eingegeben und/oder messtechnisch erfasst werden.

Ein Schritt S3 des Verfahrens aus Fig. 2 umfasst folgendes: Die Kalibriervorrichtung 14 ermittelt, ob mit der aktuellen Relativposition von Kalibriervorrichtung 14 bzw. Anzeigeeinrichtung 12 und Fahrzeug das Kalibriermuster - ggf. nach erforderlicher Modifikation (z.B. Höhenanpassung, Größenanpassung oder Verschiebung) - vollständig innerhalb der Anzeigefläche dargestellt werden kann. Grundlage hierfür sind die bekannte Fahrzeugposition sowie die Soll-Relativposition des Kalibriermusters. Genauer gesagt wird ermittelt, ob das Kalibriermuster durch die Anzeigefläche unter Erreichen der Soll-Relativposition vollständig angezeigt werden kann.

Hierfür kann beispielsweise wie folgt vorgegangen werden: Es wird geprüft, ob das Kalibriermuster - insbesondere durch Verschieben innerhalb der Anzeigefläche - so positioniert werden kann, dass es die vorgegebene Soll-Relativposition zum Fahrzeug einnimmt und dabei vollständig anzeigbar ist. Genauer gesagt wird geprüft, ob die vorgegebene Soll-Relativposition des Kalibriermusters relativ zum Fahrzeug erreichbar ist, wenn das Kalibriermusters auf der Anzeigefläche in deren aktueller Position angezeigt wird, insbesondere unter Verschieben von dessen Anzeigeposition. Als Zusatzbedingung soll das Kalibriermuster vollständig anzeigbar sein, also beispielsweise nicht virtuell über einen Rand der Anzeigefläche herausragen, wenn es zum Erfüllen der Soll-Relativposition auf dieser angezeigt und insbesondere verschoben wird.

In diesem Zusammenhang wird die bekannte Position der Kalibriervorrichtung 14 relativ zum Fahrzeug genutzt und eine Erstreckung, insbesondere umfassend eine Lage und Abmessung, von deren Anzeigefläche in einem Referenzkoordinatensystem berechnet, wie z.B. in einem Fahrzeugkoordinatensystem. Diese berechnete Erstreckung wird mit einer Soll-Position und optional einer Soll-Erstreckung des Kalibriermusters in diesem Referenzkoordinatensystem vergleichen, wobei sich die Soll-Position aus der Soll-Relativposition zum Fahrzeug ergibt.

Liegt die Soll-Position des Kalibriermusters und insbesondere dessen Erstreckung innerhalb der berechneten Anzeigeflächenerstreckung, und zwar derart, dass es vollständig angezeigt werden kann, wird optional eine entsprechend positive Rückmeldung ausgegeben. Anschließend kann das Kalibrierverfahren beginnen.

Ist dies nicht der Fall, wird eine negative Rückmeldung ausgegeben, die den Bediener vorzugsweise zu einer Änderung der Position der Anzeigeeinrichtung 12 relativ zum Fahrzeug veranlasst. Die Rückmeldung betrifft insbesondere ein aktives Bewegen der Anzeigeeinrichtung 12 relativ zum Fahrzeug. Die Rückmeldung kann Informationen zu einer Art der erforderlichen Änderung enthalten, beispielweise eine Richtungsangabe, wie einen Pfeil, betreffend eine Richtung, in die die Anzeigeeinrichtung verschoben werden soll. Alternativ oder zusätzlich kann die Rückmeldung Informationen betreffend ein Ausmaß der erforderlichen Änderung enthalten, beispielsweise betreffend ein erforderliches Verschiebungsausmaß. Letzteres kann zum Beispiel als Zahlenwert angegeben und/oder als graphische Darstellung repräsentiert sein, z.B. mittels einer Farbwahl oder einer Symbolgröße, insbesondere Pfeilgröße. Anschließend wird mit Schritt S4 fortgesetzt.

Ein Schritt S4 des Verfahrens aus Fig. 2 umfasst folgendes: Wenn der Bediener daraufhin (d.h. auf den zweiten Fall aus Schritt S3 folgend) die Relativposition der Kalibriereinrichtung 14 einschließlich von deren Anzeigeeinrichtung 12 zum Fahrzeug ändert, wird die Ermittlung gemäß Schritt S3 insbesondere fortlaufend und/oder iterativ wiederholt. Sobald eine Relativposition erreicht ist, bei der das Kalibriermuster bei frei festlegbarer Position innerhalb der Anzeigefläche unter Erreichen der Soll-Relativposition vollständig angezeigt werden kann, wird dem Bediener eine entsprechend positive Rückmeldung gegeben. Dieser kann das Bewegen der Anzeigeeinrichtung 12 unmittelbar beenden und das Kalibriermuster wird daraufhin in der Soll-Relativposition angezeigt. Solange dies nicht der Fall ist, kann die negative Rückmeldung nach jedem Überprüfungszyklus aktualisiert werden, kann also beispielsweise eine Angabe betreffend eine erforderliche Verschiebungsrichtung und/oder ein erforderliches Verschiebungsausmaß fortlaufend aktualisiert werden.

Im Vorstehenden wurde beispielhaft vorausgesetzt, dass die Relativorientierung der Kalibriereinrichtung 14 einschließlich deren Anzeigeeinrichtung 12 zu dem Fahrzeug einer Soll-Orientierung entspricht. Ist dies nicht der Fall, kann diese Relativorientierung also ein zusätzlicher Parameter des vorstehend geschilderten Verfahrens berücksichtigt werden. Insbesondere können die berücksichtigten Positionsinformationen um Orientierungsinformationen erweitert und kann somit die vollständige räumliche Lage ermittelt werden, d.h. können neben den translatorischen Positionsfreiheitsgraden auch die Orientierungs- bzw. Rotationsfreiheitsgerade betrachtet werden.

In Schritt S1 kann dies zum Beispiel bedeuten, dass nicht nur die Relativposition zwischen Kalibriereinrichtung 14 und Fahrzeug ermittelt wird, sondern auch deren Relativorientierung. In Schritt S2 kann zum Beispiel eine vollständige Soll-Relativlage berücksichtigt werden. In Schritt S3 kann die Ermittlung der Anzeigeflächenerstreckung im Referenz- und insbesondere Fahrzeugkoordinatensystem um die Orientierung der Anzeigeeinrichtung 12 erweitert werden, also kann die vollständige räumliche Lage und Erstreckung der Anzeigefläche im Fahrzeugkoordinatensystem ermittelt werden. Schließlich könnte Schritt S4 eine iterativ fortlaufende Anpassung nicht nur der Position, sondern auch der Orientierung umfassen, bis die Kalibriereinrichtung 14 so ausgerichtet ist, dass sowohl eine Sollposition als auch eine Sollorientierung als Bestandteile des Soll-Zustandes zur Anzeige des Kalibriermuster erfüllt sind. Dies stellt sicher, dass das Kalibriermuster optimal angezeigt wird und der Kalibrierprozess beginnen kann.

Gemäß einer erfindungsgemäßen Variante des vorstehend erläuterten Verfahrens kann zusätzlich oder alternativ Folgendes vorgesehen sein: Im Anschluss an die Schritte S1 oder S2 werden vorab zulässige Relativpositionen von Kalibriereinrichtung 14 bzw. Anzeigeeinrichtung 12 und dem Fahrzeug ermittelt, bei deren Einnahme das Kalibriermuster unter Erreichen der Soll-Zustandes anzeigbar ist. Beispielsweise kann ein räumlicher Bereich umfassend zulässige Relativpositionen ermittelt werden.

Anschließend wird fortlaufend die Relativposition der Anzeigeeinrichtung 12 bzw. von deren Anzeigefläche zu dem Fahrzeug ermittelt. Insbesondere wenn die ermittelte Relativposition in dem o.g. Bereich liegt, wurde eine zulässige Relativposition erreicht. Daraufhin wird eine entsprechend positive Rückmeldung ausgegeben und das Kalibrierverfahren kann beginnen. Auch bei dieser Variante ist eine Erweiterung um Orientierungsinformationen gemäß einer Weiterbildung möglich.

Das erfindungsgemäße Vorgehen kann zum Beispiel darin resultieren, dass die Ausrichtung der Anzeigeeinrichtung 12 nur in einem geringen und insbesondere einem Mindestmaß geändert werden muss. Sobald erstmalig eine zulässige Ausrichtung erreicht wurde, kann das Kalibriermuster unter Einnahme des Soll-Zustandes angezeigt werden.

Beispielweise kann bei einer Höhenverstellung ausgehend von einer beliebigen Höhenposition nur ein minimal erforderlicher Hubweg ausgeführt werden. Das Kalibriermuster kann unmittelbar dann angezeigt werden, wenn dies erstmals unter Einnahme des Soll-Zustandes möglich ist, also sobald eine durchgeführte Höhenverstellung dies erstmals erlaubt.

Für andere Ausrichtungs-Freiheitsgerade gilt Entsprechendes. Es ist nicht erforderlich, die Anzeigeeinrichtung 12 von vornherein hochpräzise relativ zu Fahrzeug-Bildsensor auszurichten und ggf. erst nachträglich eine Position und/oder Orientierung des Kalibriermusters innerhalb der Anzeigefläche anzupassen. Stattdessen ist seitens des Bedieners von vornherein nur eine Art Grobausrichtung erforderlich, ab der die Anordnung 10 und insbesondere deren Computereinrichtung 20 dann selbsttätig die Position und/oder Orientierung des Kalibriermusters prüft und ggf. festlegt oder zumindest den Bediener durch geeignete Rückmeldungen zu einer geeigneten Position und/oder Orientierung der Anzeigeeinrichtung 12 führt.

## Patentansprüche

1. Anordnung (10) zum Anzeigen eines Kalibriermusters für das Kalibrieren eines Fahrzeug-Bildsensors, wobei die Anordnung (10) eine Kalibriervorrichtung (14) umfasst, mit:
- einer außerhalb des Fahrzeugs angeordneten Anzeigeeinrichtung (12) zum Anzeigen des Kalibriermusters,
- wenigstens einer Computereinrichtung (20),
wobei die Kalibriervorrichtung (14) relativ zu dem Fahrzeug variabel ausrichtbar ist,
wobei die Computereinrichtung (20) dazu eingerichtet ist, wenigstens einen zulässigen Ausrichtungszustand der Kalibriervorrichtung (14) zu ermitteln, bei deren Einnahme das Kalibriermuster derart angezeigt werden kann, dass es einen Soll-Zustand einnimmt.

2. Anordnung (10) nach Anspruch 1,
wobei der Soll-Zustand eine Vollständigkeit des Kalibriermusters und/oder eine Soll-Relativposition des Kalibriermusters relativ zu dem Fahrzeug und/oder eine Soll-Größe des Kalibriermusters umfasst.

3. Anordnung (10) nach Anspruch 1 oder 2,
wobei die Computereinrichtung (20) dazu eingerichtet ist, während Änderungen der Ausrichtung der Kalibriervorrichtung (14) relativ zu dem Fahrzeug wiederholt zu ermitteln, ob ein zulässiger Ausrichtungszustand eingenommen wird.

4. Anordnung (10) nach einem der vorangehenden Ansprüche,
wobei die Anordnung (10) dazu eingerichtet ist, eine Rückmeldung für einen Bediener auszugeben, dass ein zulässiger Ausrichtungszustand erreicht wurde.

5. Anordnung (10) nach einem der vorangehenden Ansprüche,
wobei das Kalibriermuster innerhalb einer Anzeigefläche der Anzeigeeinrichtung (12) variabel positionierbar und/oder variabel orientierbar und/oder mit variabler Größe anzeigbar ist.

6. Anordnung (10) nach Anspruch 5,
wobei die Computereinrichtung (20) dazu eingerichtet ist, zu ermitteln, ob für einen gegebenen Ausrichtungszustand ein Soll-Zustand des Kalibriermusters durch geeignete Festlegung der Position und/oder Orientierung und/oder Größe von diesem innerhalb der Anzeigefläche erreichbar ist.

7. Verfahren zum Ausrichten einer Kalibriervorrichtung (14) für das Kalibrieren eines Fahrzeug-Bildsensors, wobei die Kalibriervorrichtung (14) variabel relativ zu dem Fahrzeug ausrichtbar ist und eine Anzeigeeinrichtung (12) zum Anzeigen des Kalibriermusters umfasst,
wobei das Verfahren aufweist:
- computergestütztes Ermitteln von wenigstens einem zulässigen Ausrichtungszustand der Anzeigeeinrichtung, bei deren Einnahme das Kalibriermuster derart angezeigt werden kann, dass es einen Soll-Zustand einnimmt.

8. Verfahren nach Anspruch 7,
wobei der Soll-Zustand eine Vollständigkeit des Kalibriermusters und/oder eine Soll-Relativposition des Kalibriermusters relativ zu dem Fahrzeug und/oder eine Soll-Größe des Kalibriermusters umfasst.

9. Verfahren nach Anspruch 7 oder 8,
wobei das Verfahren ferner während Änderungen der Ausrichtung der Kalibriervorrichtung (14) relativ zu dem Fahrzeug umfasst: wiederholtes Ermitteln, ob ein zulässiger Ausrichtungszustand eingenommen wird.

10. Verfahren nach einem der Ansprüche 7 bis 9,
wobei das Verfahren ferner umfasst: Ausgeben einer Rückmeldung für einen Bediener, dass ein zulässiger Ausrichtungszustand erreicht wurde.

11. Verfahren nach einem der vorangehenden Ansprüche,
wobei das Kalibriermuster innerhalb einer Anzeigefläche der Anzeigeeinrichtung (12) variabel positionierbar und/oder variabel orientierbar und/oder mit variabler Größe anzeigbar ist.

12. Verfahren nach Anspruch 11,
wobei das Verfahren umfasst: Ermitteln, ob ein Soll-Zustand für einen gegebenen Ausrichtungszustand durch geeignete Festlegung der Position und/oder Orientierung und/oder Größe des Kalibriermusters innerhalb der Anzeigefläche erreichbar ist.
